Europäisches Patentamt

European Patent Office

Office européen des brevets

(11) Publication number: **0 274 077 B1**

## (12) EUROPEAN PATENT SPECIFICATION

(45) Date of publication of patent specification: **30.10.91**   (51) Int. Cl.⁵: **G05D 23/19**, G01W 1/17

(21) Application number: **87118312.5**

(22) Date of filing: **10.12.87**

(54) Thermal sensing system.

(30) Priority: **12.12.86 JP 296924/86**
**12.12.86 JP 296926/86**

(43) Date of publication of application:
**13.07.88 Bulletin 88/28**

(45) Publication of the grant of the patent:
**30.10.91 Bulletin 91/44**

(84) Designated Contracting States:
**DE FR GB**

(56) References cited:
**US-A- 3 062 941**
**US-A- 3 751 634**

**PATENT ABSTRACTS OF JAPAN, vol. 10, no.
15 (P-422)[2072], 21st January 1986; & JP-
A-60 170 731 (MATSUSHITA DENKI SANGYO
K.K.) 04-09-1985**

**Idem**

**PATENT ABSTRACTS OF JAPAN, vol. 8, no.
72 (P-265)[1509], 4th April 1984; & JP-A-58
218 624 (MATSUSHITA DENKI SANGYO K.K.)
19-12-1983**

(73) Proprietor: **MATSUSHITA ELECTRIC INDUSTRI-
AL CO., LTD.
1006, Oaza Kadoma
Kadoma-shi, Osaka-fu, 571(JP)**

(72) Inventor: **Tajima, Akio
1-37, Tomondo Miyake-cho
Shiki-gun Nara Prefecture, 636-03(JP)**
Inventor: **Ishii, Katsumi
1093-201, Asakuradai-nishi 5-chome
Sakurai City, 633(JP)**

(74) Representative: **Dr. Elisabeth Jung Dr. Jürgen
Schirdewahn Dipl.-Ing. Claus Gernhardt
P.O. Box 40 14 68 Clemensstrasse 30
W-8000 München 40(DE)**

## Description

The present invention relates to a temperature sensing system as stated in the precharacterising portions of claims 1 and 7, respectively. Such a sensing system senses the thermal condition, including the effects of radiant heat and air flow of the environment for an air conditioning system and serves the purpose of providing a comfortable environment for human beings.

Air conditioning systems for providing a comfortable indoor environment for human beings have mostly and conventionally been controlled on the basis of results of measurements of the environmental air temperature by a temperature sensor which was mainly a thermistor. Since the air temperature has only been directly detected and the controlling is made thereby, in such conventional systems it has not been possible to reflect the human sensation concerning air flow and radiation temperature, which is a fundamental item for the human sensation of comfortability. Accordingly, even though the air temperature is maintained constant, the temperature sensation of the human body differs depending on various environmental conditions, and inspite of the temperature control the human being gets the sensation that the temperature becomes sometimes too hot or too cold and the user must change the temperature setting from time to time, even though a thermostat is used.

Accordingly, as the standard of life improves, an improved controlling apparatus which responds to the human sensation of persons living in the air-conditioned space has been strongly demanded.

The human body retains its body temperature substantially constant, in order to keep its life activity in order. That is, it produces heat in the body by the metabolism and, on the other hand, makes a thermal exchange with the environment, principally by convection, radiation and evaporation, thereby keeping the temperature of the deep inside part of the body constant. For instance, the generation of cool feeling in the wind is induced by a heat loss through convection, while a warm feeling under strong sunshine from a clear sky, even under a moderate environmental temperature, is caused by the reception of solar radiation by the human body. Besides, the body temperature adjustment is made by a control of the blood flow, sweating under a hot condition and shivering under a cold condition. The thermal sensation of the human body becomes worse as the extent of the required temperature adjustment by the human body increases, such as by increased control of the blood flow, sweating and shivering. It is confirmed that the human thermal sensation has a correlation with the human skin temperature, which is the point of junction between the human body and the environment. Accordingly, if there is provided a thermal sensing system which produces a heat analogous to the human skin and at the same time senses the environmental condition, the thermal sensation of the human body can be simulated thereby.

The average condition of the convection of heat transfer of the whole human body (influence by air flow) can be considered to be substantially equivalent to and simulated by a transducer of a size of cylinder of about 15 cm diameter or a sphere of about 15 cm diameter. Therefore, by heating such a transducer to a temperature which is substantially equal to that of the human body and by measuring its surface temperature, a good simulation system of thermal sensing can be realized. In such a way, various trials have been made.

US-A-3 751 634 discloses a thermal sensing body, the outermost portion of which consists of an approximately 1 mm thick layer of heat-insulating material. Underneath this layer an electrical resistance wire is wound on a body of plastic foam, the resistance of the wire being used for regulating the temperature of the sensing body.

One conventional example of a temperature sensing system disclosed in Japanese examined published patent application JP 35-7794 is shown in FIG. 1. In the conventional example of FIG. 1, the thermal sensing system 1 consists of a thermal sensing unit 2 and a control unit 3. The thermal sensing unit 2 comprises an outer shell 4 of about the size of human a head skull and a temperature sensor 7 disposed therein and consisting of an electric resistor 5 as a heater connected through feed wires 8 to the control unit 3 and a temperature sensor 6 such as a thermistor. The control unit 3 comprises a controlling means 9 which is a constant voltage circuit for feeding power corresponding to the amount of heat loss of the human body through power feed wires 8 connected to the heater 5, and comprises a judgement unit 12. The judgement unit 12 detects internal temperature change of the transducer 7 determined by the environmental temperature and the cooling effect influenced by the air flow and the radiant heat on the thermal sensing unit 2 through signal wires 10, thereby producing a control signal to the air conditioner 11 based on the difference from a preset reference value. In such a thermal sensing system 2, though it is possible to output an equivalent output to the human thermal sensation, its disposition is limited due to its large size, and besides, its power consumption is considerably large, about 10 W, because it requires heat to warm the large outer shell 4, and further its response time is as slow as 10--15 minutes because of its size. Accordingly such a system has difficulties in the practical usage of a thermal sensing systems because of the application to a controlling system of an air conditioner.

When it is intended to reduce the size of the thermal sensing unit, it is likely that the rate of heat transfer by convection becomes larger than in the case of the human body. Thus, the second prior art wherein the convection heat transfer is reduced in the thermal sensing unit was proposed as shown in Japanese unexamined published patent application JP 60-170731. In the conventional example of FIG. 2, a heater 13 has a coating 14 of a jelly type material which makes the temperature conductivity comparable to that of the human skin. The jellied coating 14 therein has a temperature sensor 15, which is a thermocouple for sensing temperature, thereby constituting a temperature sensor 16. Furthermore, on the outer side of the temperature sensor 16, there is provided a cover 18 which is molded by a transparent polyethylene resin or the like which can pass heat radiation and has a number of vents. Since in the above-mentioned constitution, the cover 18 only attenuates the convection of the heat transfer, not attenuating the radiation of the heat transfer, an equivalent output to the human thermal sensation is obtainable. However, in order to prevent radiation of the heat transfer by the cover 18, the cover must be very thin, such as microns thick. If the cover 18 is thick in order to strengthen its structure, this results in the shortcoming that the radiation heat transfer unexpectedly attenuates, thereby attenuating the feeling to produce radiation characteristics equivalent to the human skin. Furthermore, since a special jellied material is used as coating 14, its configuration becomes complicated, and the response characteristic become worse.

In order to solve the above-mentioned problems of the prior arts, the present invention proposes an improved thermal sensing system capable of having a sensation of convection, radiation and evaporation equivalent to that of the human skin even by its small size.

This object is solved by a temperature system having the features stated in claim 1 or 7. Advantageous further embodiments of this temperature sensing system are indicated in the subclaims.
The improvement is made by the adoption of the special configuration to reduce the flow rate of the air to reduce the convection heat transfer and by converging the radiant heat to increase the amount of radiant heat input to the transducer.

According to the above-mentioned constitution of the thermal sensing system, the system can control the air conditioning system with good response and with moderate power by using control signals suitable for microprocessor controlling. Therefore, in comparison with the conventional controlling of the air conditioning system using only air temperature sensing, a more improved controlling which is agreeable to the human sensation to enable comfortable environment is obtainable, through a more rapid warming up or cooling down of the space to be air-conditioned, taking into account the corrections for radiation of sun light, influence of air flow and evaporation, by using only a small sized sensor unit.

The transducer carries out the exchange of radiant heat in the inside space of the shell through the opening with the ambient matters and sun shine, and besides it makes the convective heat exchange with the secondary flow in the inside space of the shell induced by the ambient flow. Since the shape and size of the shell is designed in such a way that the ratios among the convective heat transfer and the radiant heat transfer by the transducer and the ambient atmosphere is substantially identical with the human body, an amount of load for retaining the transducer at a preset temperature by the controlling means corresponds to a load for retaining the human body temperature at a constant value. Therefore, by taking out an electric signal corresponding to the former load, the thermal sensation of the human body can be judged through the output; and by controlling the air conditioning system based on the output, a comfortable air-conditioned space can easily be obtained.

Furthermore, by giving the transducer or thermal sensor a small type simple configuration, the response time to changes of plural physical amounts in the environment such as air temperature, air flow and radiation temperature, can be reduced to about 15 seconds, which far shorter in comparison with the conventional response time of about 15 minutes. Thereby, a comfortable control of the air conditioning system can be made by quicky responding to an atmospheric change, besides the responses to plural physical amounts.

Furthermore, since the transducer can be designed to operate with a very small wattage of power such as 3 mW, contrasted to 10 W of the conventional temperature sensing unit, the transducer is operable by a dry battery. Accordingly, the transducer or temperature sensor can be enclosed in a remote control unit which is to be used near the human body, or at similar positions which are objects of the control, and thereby atmospheric temperature sensing in an actual situation becomes easy and ideal.

In addition, the temperature sensing system in accordance with the present invention issues an output having electric power changes which is easily usable as a control signal for the air conditioning system, and therefore, the sensing system has a very wide utility as thermal sensing system for the air conditioning system.

The invention is further described in connection with preferred embodiments and by reference to the accompanying drawings.

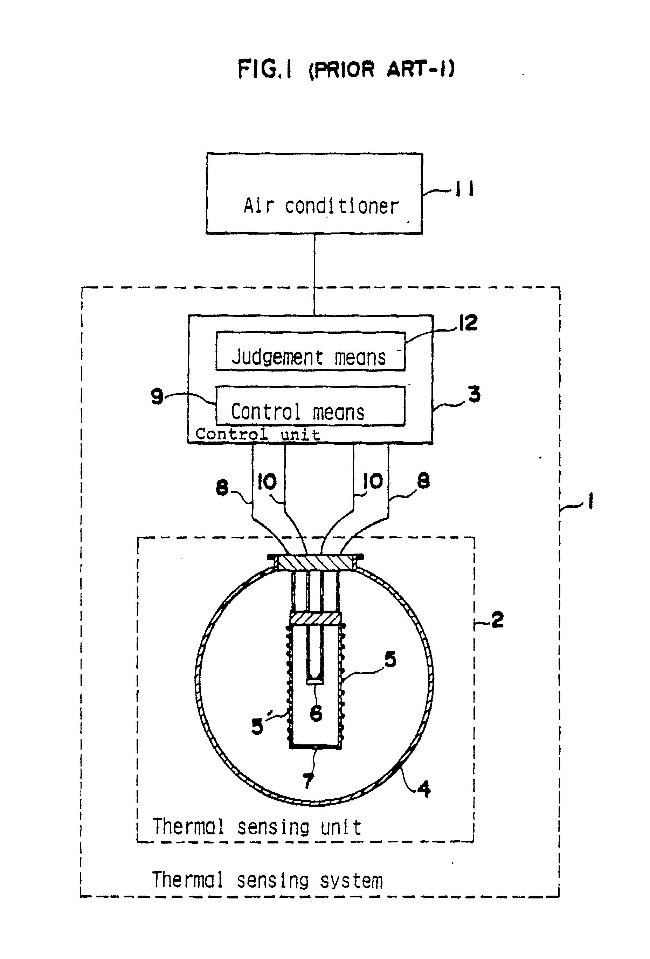

FIG. 1 is the block diagram of the first conventional example of the thermal sensing system.

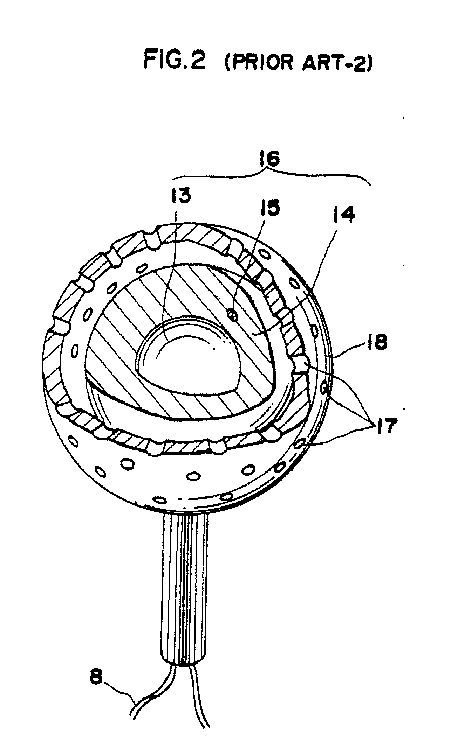

FIG. 2 is the perspective view showing the second conventional thermal sensing system with one part broken out.

FIG. 3 is a circuit block diagram of the thermal sensing system embodying the present invention.

FIG. 4 is a partially cut-out perspective view showing a thermal sensing unit of a first embodiment of the invention.

FIG. 5 is a circuit diagram of one example of a circuit of a control part for the thermal sensing system.

FIG. 6 is a graph showing the temperature-resistance characteristics of a thermistor used as a transducer of the first embodiment.

FIG. 7 is a computer-drawn air flow diagram in a sectional view along the axis of the thermal sensing unit, for showing the air flow around the unit.

FIG. 8 is a graph showing the relation between the human sensation and the output signal (load output of the controlling means) of the embodiment.

FIG. 9 is a graph showing a characteristic curve of the output (sensor voltage) and human skin temperature.

FIG. 10 is a characteristic diagram showing characteristics concerning radiation heat.

FIG. 11 is a partially cutout perspective view of another embodiment of the thermal sensing unit.

FIG. 12 is a partially cut-out perspective view of still another embodiment of the thermal sensing unit.

FIG. 13 is a partially cut-out perspective view of still another embodiment of the thermal sensing unit.

FIG. 14 is a partially cut-out perspective view of still another embodiment of the thermal sensing unit.

FIG. 15 is a block diagram with a partially cut-out perspective view of still another embodiment of the present invention.

FIG. 16 is a circuit diagram of the controlling part of the embodiment shown in FIG. 15.

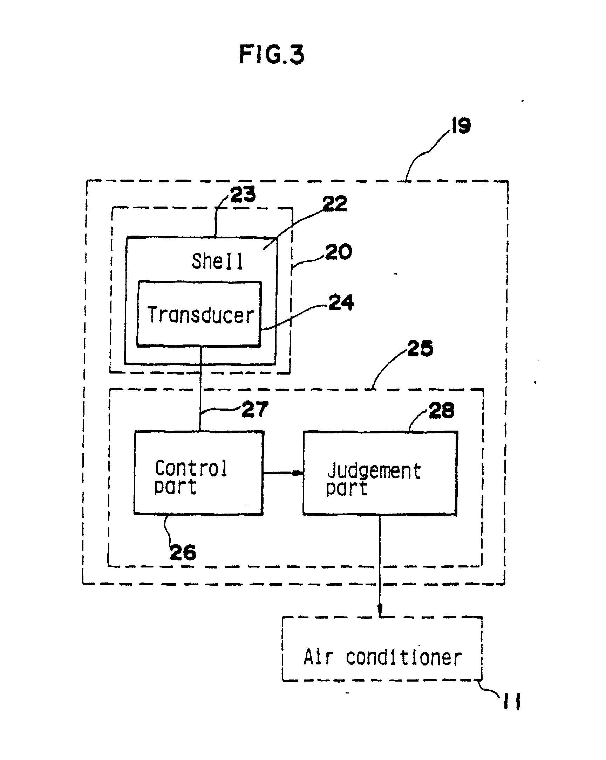

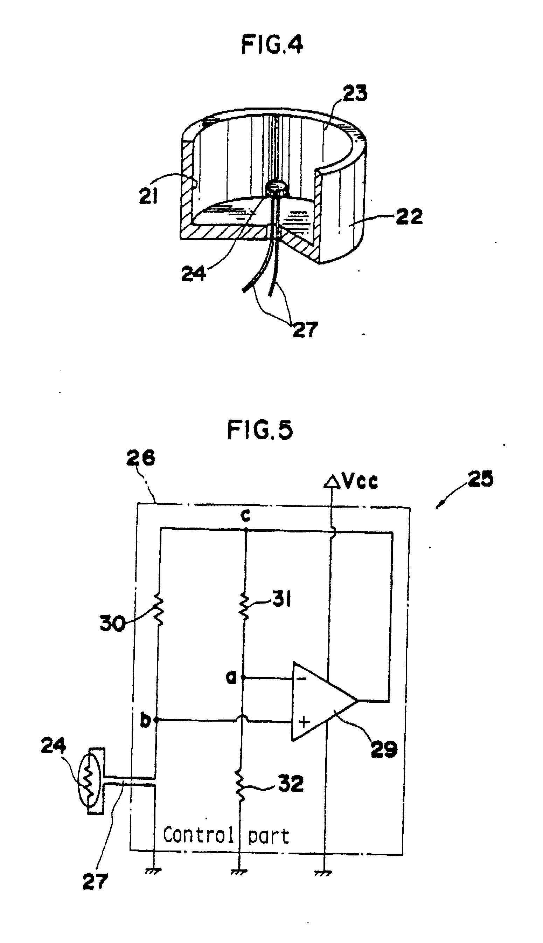

FIG. 3 shows the whole circuit block diagram of the thermal sensing system 19 in accordance with the present invention and an air conditioner 11 which is to be controlled by the thermal sensing system 19. As shown in FIG. 3, the thermal sensing system comprises a thermal sensing unit 20, the configuration of which is shown in FIG. 4, and a control unit which is an electronic circuit or a microprocessor and which outputs signals to control the air conditioner 11. The control unit 25 comprises a control part 26 and a judgement part 28. The control part 26 controls, through electric wires 27, a transducer 24, e.g. a thermistor or a combination of a very small heater and a temperature sensing device and further gives signals to the judgement part 28. The judgement means judges the signals from the control part 26 and issues appropriate control signal to the air conditioner 11. As shown in FIG. 4, which is a partially cut out perspective view of the thermal sensing unit 20, the thermal sensing unit 20 comprises a shell 22 of a cup-shape or a cylindrical shape having a wide opening 23 at its top part. The size of the cylindrical shape shell is, for instance of about 30 mm in diameter and of about 15 mm in height and has an inside face made of a material well reflecting to light and radiant heat, such as aluminium. Substantially on the axis of the shell 22 and at the height of about 1/3 from the inside bottom of the shell, a small sized transducer 24, such as a thermistor is provided. The transducer 24 has the function to be heated by receiving a control current from the control part 26 of the control unit 25, and also changes its electric resistance depending on its temperature, to give electric signals which represent the temperature, for instance as voltage across its both ends. The transducer 24 is controlled so as to have a temperature substantially equivalent to that of the human body skin. Therefore, by receiving the signal of temperature from the transducer 24, the judgement part 28 issues a control signal for the air conditioner 11. The control signal corresponds to the state of control load of the control part 26, such as the voltage across two lead wires 27, or the current therethrough, taking into account the human temperature sensation characteristics.

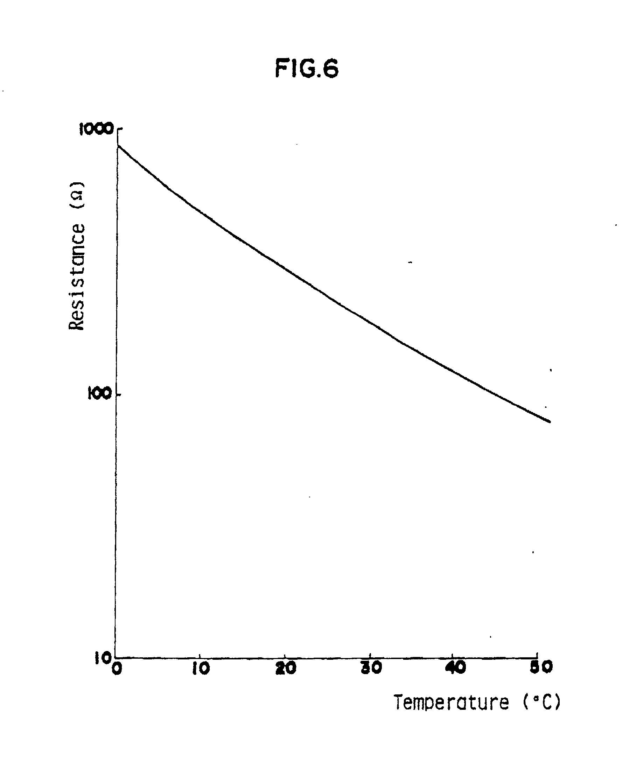

FIG. 5 shows a circuit diagram of one example of the control unit 25, which comprises a thermistor as transducer 24, the control part 26 and lead wires 27 connecting these. The control circuit comprises an operational amplifier 29 and resistors 30, 31 and 32 which, together with the thermistor 24, constitute a temperature responding circuit. The transducer (i.e., thermistor) 24 has a known temperature-resistance characteristic shown in FIG. 6. When the circuit is operated by application of a power through the power source terminal Vcc, the transducer 24 is electrified in such a manner that it makes a predetermined resistance corresponding to a predetermined temperature, which makes the equilibrium state of the operational amplifier circuit. That is, for instance, when any of the items of the environmental conditions, i.e., air temperature, air flow or radiant temperature changes thereby lowering the temperature of the transducer 24, the resistance of the transducer 24, respectively the thermistor, increases. Thereby the potential of the point "b" rises. Therefore, the operational amplifier 29 amplifies the temperature difference between the point "a" and the point "b" of FIG. 5, and hence, the potential of the point "c" rises. Therefore, the current flowing in the transducer 24 increases; and the increase of current increases the heat generation of the transducer 24 and raises its temperature. Then, the temperature of the transducer 24 reaches the equilibrium temperature determined by the circuit design. At that operation, the heat balance of the transducer surface and its environment is given by the following equation

$$Q = \alpha c(Ts-Ta) + \alpha r(Ts-Tr) \qquad (1),$$

wherein

Q: is the heat discharge (load for controlling the temperature of the transducer 24 at a constant temperature) per unit surface area of the transducer 24,

$\alpha c$: is the convection heat transmittance,

Ts: is the temperature of the transducer 24 (controlled at a constant temperature),

Ta: is the atmospheric temperature,

$\alpha r$: is the radiant heat transmittance between the transducer 24 and the environment,

Tr: is the environmental radiant temperature.

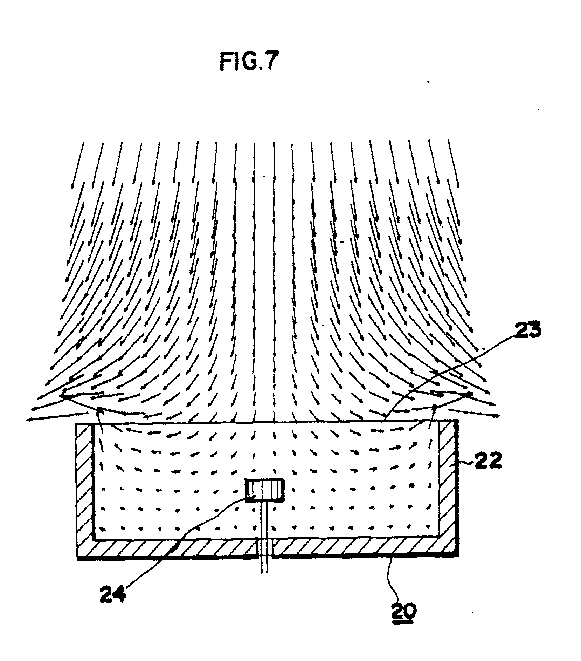

Since the transducer 24 is disposed in the hollow space of the shell on its axis at a height of about 1/3 of the depth from the bottom of the hollow space, the transducer 24 does not make a full convection heat exchange directly with the ambient air flow around the thermal sensing unit 20. But the transducer 24 makes a heat exchange by secondary air flow in the hollow space of the shell, which is induced by the external air flow outside the shell and which has a very much reduced flow velocity. FIG. 7 is a computer-drawn sectional view showing air flows inside and outside of the shell 22, wherein the air flow directions are shown by small arrows and the flow velocities are shown by the length of the arrows.

Since the inside face 21 of the shell 22 is made by a material of a good reflectivity to light and heat such as an aluminum polished face, the transducer 24 makes the heat exchange directly with the surrounding matters, sun light and radiation heat, with the indirect light and radiation which are reflected by the inside face 21. Thus, a very efficient heat exchange is obtainable.

Owing to the above-mentioned configuration, the radiation heat transmittance $\alpha r$ of the transducer 24 and the convection heat transmittance $\alpha c$ of it become substantially equal to the radiation heat transmittance and the average convection heat transmittance of the human body, respectively. Thus, a high correlation between (1) a simulated heat load to maintain the transducer 24 at a predetermined temperature, which is intended to correspond to the actual human skin body temperature, and (2) an actual heat load to maintain the body temperature of the human body under the same ambient condition is obtainable.

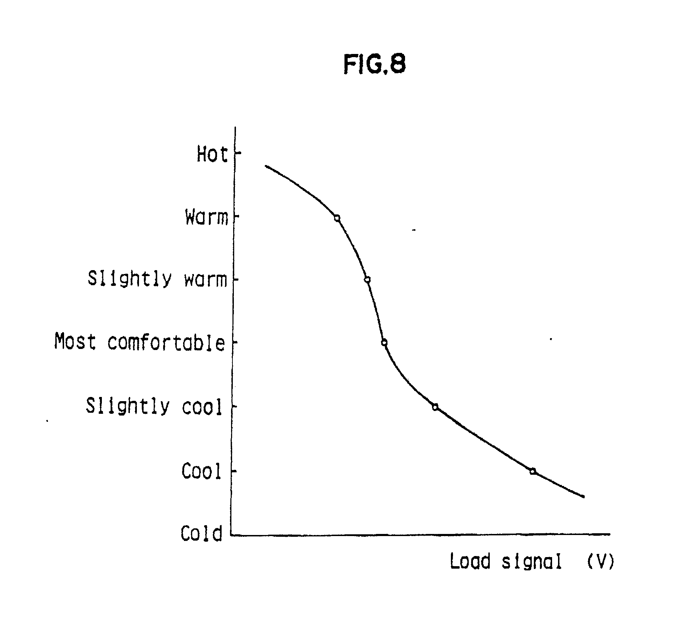

FIG. 8 shows the relation between the load signal which is taken out as the voltage changes at the point "b" or point "c" in the circuit of FIG. 5 and the human thermal sensation. The judgement means 28 comprises an one-chip microprocessor. In the judgement means 28, a ROM preliminarily stores a correction table for correcting the non-linearity of the thermistor as transducer 24 to a linear relation and the relation of FIG. 8 showing the human temperature sensation versus the, load signal to be obtained by the control part 26. Such a storing in the ROM is made in the shape of a numerical table or a numerical equation. Accordingly, the judgement means can issue the output which is substantially equivalent to the human thermal sensation to be made by the air temperature, the air flow and the radiation heat in that ambient condition, basing on an electric signal from the transducer 24. Therefore, by controlling the air conditioner so as to produce an equilibrium, by utilizing the output of the judgement part 28, a most comfortable environment which takes into account the air temperature, the air flow and the radiant heat is obtainable.

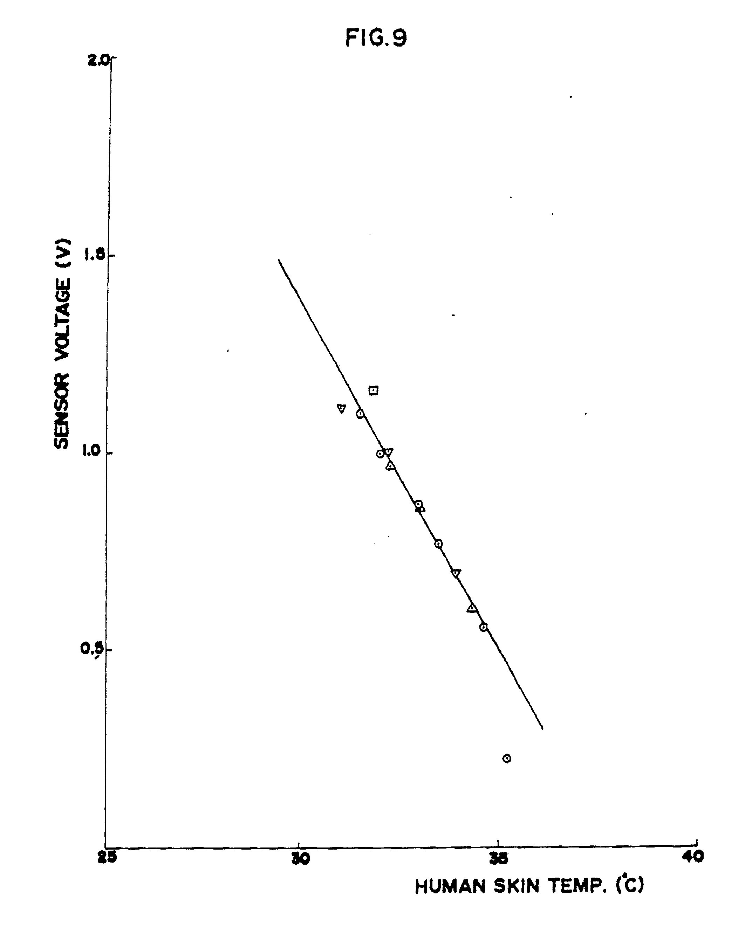

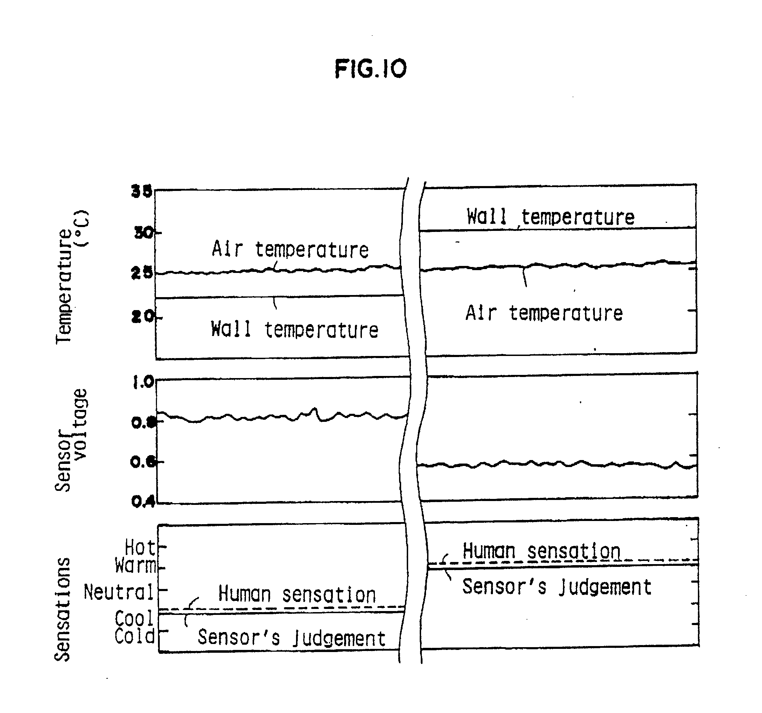

A characteristic of the thermal sensing system 19 of the present invention with respect to the air temperature and the air flow is shown in FIG. 9. FIG. 9 shows a comparison of outputs of the thermal sensing system 19 under various conditions of the air temperature, the air flow and a number of garments put on with the human skin temperature at the same condition. This experimental plotting shows that there exists a correlation of sensitivity between the sensitivities for air temperature and air flow of the thermal sensing system of FIG. 19 with the human body. FIG. 10 shows a characteristic of the radiation of the thermal sensing system 19. FIG. 10 shows measured curves of outputs of the thermal sensing system 19 in those cases, where the wall temperatures are higher than (right hand curves) and lower than (left hand curves) a fixed temperature of air and the feelings stated by test people in a room. The graph of FIG. 10 proves that, even under a constant air temperature, the human sensation of temperature varies depending on a difference of wall temperatures, namely the radiant temperature from the wall, and that the output of the thermal sensing system in accordance with the present invention agrees with the human sensation of temperature.

In the above-mentioned examples, wherein the transducer 24 is a thermistor, a transducer consisting of a known platinum resistor as a temperature measurement element can be similarly used.

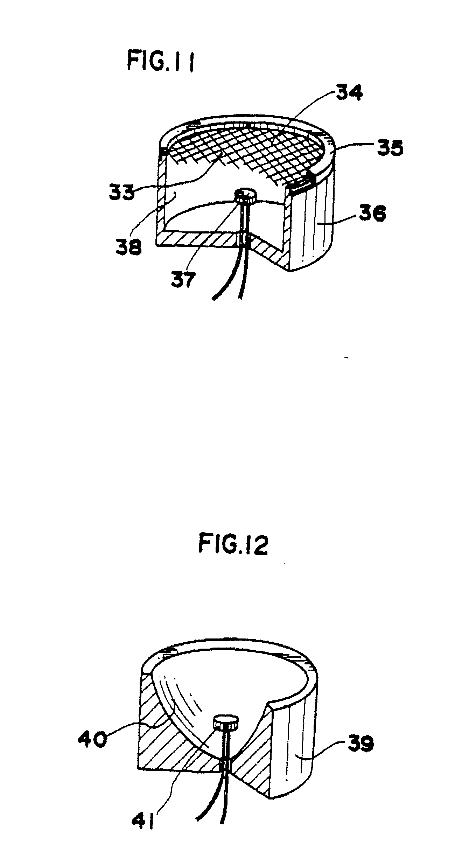

FIG. 11 shows another embodiment of the thermal sensing unit. In this example, the opening 33 is covered by a porous cover 34, the surface of which is non-reflective against light and heat. For instance a porous cover 34 of about 60 % aperture ratio made of stainless steel net, the surface of which is coated by non-reflective or luster-less black surface paint, is fixed to the opening 33 by a fixing ring 35 fitted to the opening 33 of the shell 36. By such a configuration, an expected damaging of the transducer 37 or inside face (reflective face) 38 of the thermal sensing unit by a finger or a pencil or the like is prevented. The porous cover 34 may be made of any suitable metal or plastic material.

FIG. 12 shows another embodiment of the thermal sensing unit. In this example, the inside reflective face 40 of the shell 39 is configurated as a paraboloid of revolution and the transducer 41 is substantially positioned at the focal point of the paraboloid of revolution of the inside reflective face 40. According to such a configuration, the thermal sensing unit is given directivity against radiation, and therefore it is possible to detect the influence of the radiation of the wall. Besides, by such a configuration wherein the sensitivity is raised by converging the directivity for the radiation, the shape and the size of the transducer 41, the sensing unit per se, can be made smaller, thereby enabling operation by smaller power. The shell 39 can be made by a plastic mold with aluminum reflective coating of, for instance, a vacuum deposited aluminum film. The curved surface of the inside face may be, apart from beeing a simple paraboloid of revolution, another curved faces such as a composite parboloid of revolution.

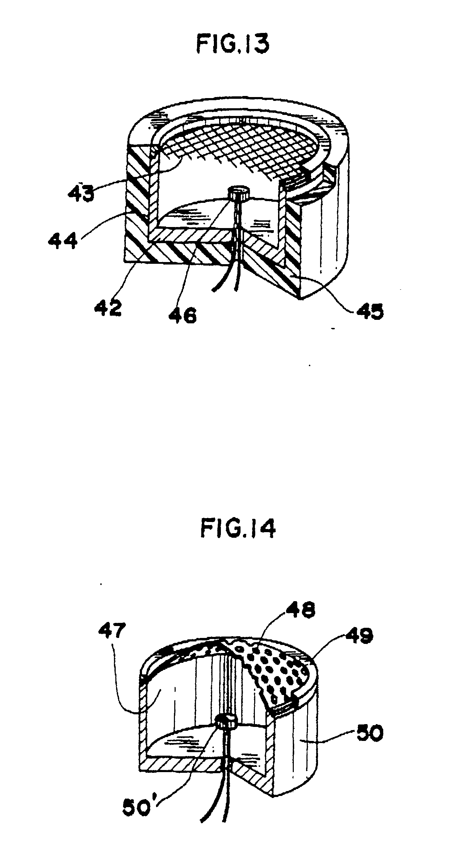

FIG. 13 shows still another embodiment wherein the heat insulative material 45 is provided on the outside face 44 of the shell 42. For example, by forming a foamed urethane heat insulator 45 of about 5 mm thickness on the outside face 44 of the shell 42, undesirable heat transmission from the outside face of the shell 42 is prevented, and the transducer 46 responds more quickly.

FIG. 14 shows still another embodiment wherein at the opening 47 of the shell 50, a porous cover 48 having a convex or hemispherical shape and being made of stainless steel sheet is provided. The porous cover has an aspect ratio of about 60%. By providing the porous cover 48 in the convex or hemispherical face shape, it is possible to receive a radiation, which is almost parallel to the face of the opening 47; and besides, the influence of the air flow can be sensed by the transducer 50' without a severe influence of the direction of the air flow. Furthermore, by making the porous cover 48 in a hemispherical or convex shape, the cover 48 becomes strong, so that the risk of damage by unexpected touch or collision is reduced.

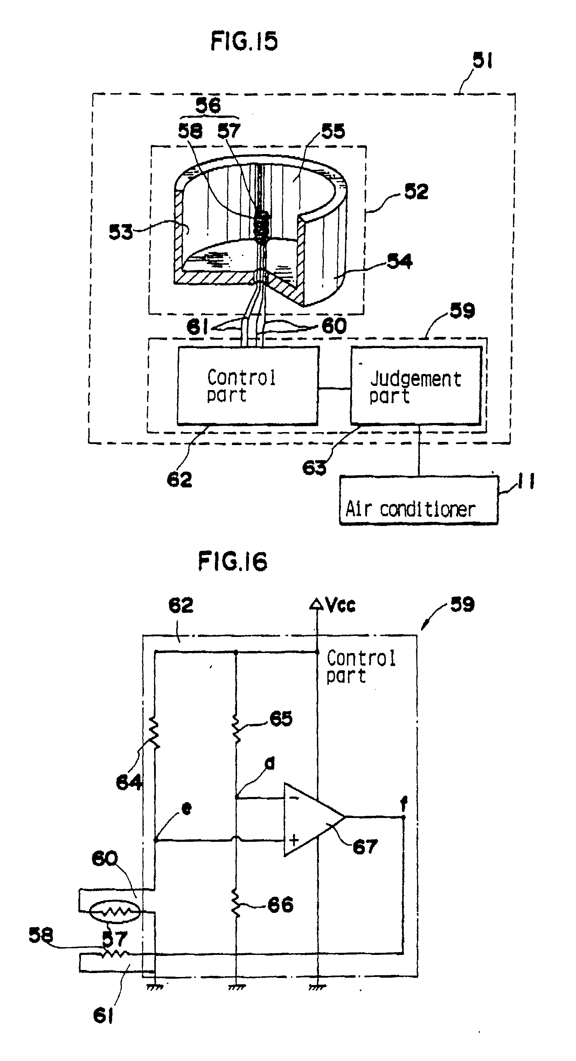

FIG. 15 and FIG. 16 show still another embodiment. As shown in FIG. 15, the thermal sensing unit 52 comprises a cylindrical shell 54 having a hollow space inside and a wide opening 55 on the top part and being made of a good reflective material, such as aluminum and of a size of about 30 mm in diameter x about 15 mm in height, and a transducer 56 provided around on the axis of the shell 54 at a height of about 1/3 from the bottom to the opening edge of the shell 54. The transducer 56 comprises a thermistor 57 as a temperature sensor at the center and a nickel-chrome wire 58 as a heater wound around the temperature sensor 57 in a manner insulated therefrom. A control unit 59 comprises a control part 62 and a judging part 63. The control part 62 receives the change of temperature inside the transducer 56 determined by the cooling effect of the environmental air temperature, the air flow and the radiant temperature to the sensing unit 52, through output signal wires 60, and feed electric power through power feed wires 61 to the heater 58 responding to the temperature difference from a preset temperature of substantially the human skin temperature. The judgement part 63 receives a signal from the control part 62 and issues an output signal for controlling an air conditioner 11, basing on the judgement made taking into account the features of the human thermal sensation.

FIG. 16 is a circuit diagram of one embodiment of the control unit 59, wherein the temperature sensor (thermistor) 57 and resistors 64, 65 and 66 together constitute a bridge circuit. The heater 58 is fed with the electric power controlled by an operational amplifier 67, in such a manner that the bridge is equilibrated. That is, for instance, when any one item of the environmental conditions, i.e. the air temperature, the air flow or the radiant temperature changes thereby lowering the temperature of the thermistor 57, the resistance of the thermistor 57 increases. Thereby the potential of the point "e" rises. Therefore, the operational amplifier 67 amplifies the temperature difference between the point "d" and the point "e" of FIG. 15, and hence, the potential of the point "f" rises. Therefore, current flowing in the heater 58 increases; and the increase of the current increases the heat generation of the heater 58 and raises the temperature of the thermistor 57. Thus the temperature of the thermistor 57 reaches the equilibrium temperature determined by the circuit design. In this operation, a thermistor of a large resistance is preferable as the temperature sensor 57.

By receiving the output signal from the control part 62, the judgement part 63 sends control signals to the air conditioner 11, so that the air conditioner is controlled to keep the temperature of the space of the object at a comfortable state, which is judged by the judgement part 63 taking into account the features of the human thermal sensation to the air temperature, the air flow and the radiant temperature.

By providing a porous cover of a non-reflective surface against light and heat on the opening 55 of the thermal sensing unit 52, by forming the cover in an outside convex shape, by forming the inside reflective face of the shell in a parabolid of revolution wherein the transducer is situated at its focus point or/and by providing a heat insulator on the outside face of the shell except the opening part, the characteristics of the thermal sensing system of this embodiment are greatly improved, like the preceding embodiments.

As described by the several embodiments, according to the present invention, a very much improved thermal sensing system can be provided, which can satisfactorily control any air conditioning apparatus, and which is not limited to air coolers, but includes room warmers, furnaces, stoves, etc., by measuring the whole environmental temperature conditions including the air temperature, the air flow and the radiant heat which effect the human body as a whole. Furthermore, since the system of the present invention is of a compact size and of small power consumpticn, the system can be contained in a battery-operated handy remote controller unit which easily and accurately senses the thermal environmental state, and which is useful not only at home, but also in offices or shops.

## Claims

1. A temperature sensing system comprising
   - a shell (22) having a hollow interior space,
   - a transducer (24), which is disposed in the hollow interior space of the shell (22) and changes its electric resistance responding to a temperature change thereof and further generates heat by being fed electric power thereto,
   - control means (26) for controlling the temperature of the transducer to be at a predetermined temperature, by controlling the electric power, and
   - judgement means (28) for determining the environmental thermal condition basing on the electric power fed to the transducer from the control means, to issue an output signal,
   **characterised in that**
   - the hollow interior space of the shell is defined by an inside face (21) of the shell which has a good reflectivity for light and heat, the shell having an opening (23) to the hollow space at the top part thereof.

2. A temperature sensing system in accordance with claim 1, wherein the transducer is a thermistor.

3. A temperature sensing system in accordance with claim 1 or 2, further comprising a porous shield (34) at said opening of the shell, the shield partly covering the opening and being non-reflective against light and heat.

4. A temperature sensing system in accordance with any of claims 1 to 3, wherein the inside face of the shell is shaped as a paraboloid of revolution and the transducer is disposed substantially at the focal point of the paraboloid of revolution.

5. A temperature sensing system in accordance with any of claims 1 to 4, wherein the shell has a heat insulator except at the opening.

6. A temperature sensing system in accordance with one of claims 3 to 5, wherein the shield has an externally convex shape.

7. A temperature sensing system comprising
   - a shell (22) having a hollow interior space,
   - a temperature sensor (24), which is disposed in the hollow interior space of the shell (22) and changes its electric resistance responding to a temperature change thereof,
   - control means (26) for controlling the temperature of the temperature sensor to be at a predetermined temperature, by controlling the electric power, and
   - judgement means (28) for determining the environmental thermal condition to issue an output signal,
   - a heater (58) for heating the temperature sensor by being fed electric power thereto is provided, and
   - the judgement means (28) determines the environmental thermal condition, basing on the electric power fed to the temperature sensor from the control means,
   **characterised in that**
   - the hollow interior space of the shell is defined by an inside face (21) of the shell which has a good reflectivity for light and heat, the shell having an opening (23) to the hollow space at the top part thereof.

8. A temperature sensing system in accordance with claim 7, wherein said temperature sensor (57) is a thermistor.

9. A temperature sensing system in accordance with claim 7 or 8, further comprising a porous shield at the opening of the shell, the shield partly corvering the opening and being non-reflective against light and heat.

10. A temperature sensing system in accordance with any of claims 7 to 9, wherein the inside face of the shell is shaped as a paraboloid of revolution and the temperature sensor is disposed substantially at the focal point of the paraboloid of revolution.

11. A temperature sensing system in accordance with any of claims 7 to 10, wherein the shell has a heat insulator except at the opening.

12. A temperature sensing system in accordance with any of claims 9 to 11, wherein the porous shield has an externally convex shape.

13. A temperature sensing system in accordance with any of claims 7 to 12, wherein the heater is provided in the proximity of the temperature sensor.

14. A temperature sensing system in accordance with claim 13, wherein the heater is wound around the temperature sensor in an insulated manner therefrom.

**Revendications**

1. Système de détection de température comprenant
   - une enveloppe (22) ayant un volume intérieur creux,
   - un transducteur (24) disposé dans l'espace intérieur creux de l'enveloppe (22) et dont la résistance électrique varie en réponse à sa variation de température et produit en outre de la chaleur par le fait qu'il alimenté en puissance électrique,
   - un moyen de commande (26) pour commander la température du transducteur afin qu'il se trouve à une température prédéterminée, par régulation de la puissance électrique, et
   - un moyen de jugement (28) pour déterminer les conditions thermiques ambiantes en fonction de la puissance électrique fournie au transducteur par le moyen de commande, afin de fournir un signal de sortie,

caractérisé en ce que
   - le volume intérieur creux de l'enveloppe est défini par une face intérieure (21) de l'enveloppe qui présente une bonne réflectivité à la lumière et à la chaleur, l'enveloppe ayant une ouverture (23) à son sommet communiquant avec le volume creux.

2. Système de détection de température selon la revendication 1, dans lequel le transducteur est une thermistance.

3. Système de détection de température selon la revendication 1 ou 2, comprenant en outre un capuchon poreux (34) situé sur ladite ouverture de l'enveloppe, le capuchon recouvrant partiellement l'ouverture et ne réfléchissant ni la lumière ni la chaleur.

4. Système de détection de température selon l'une quelconque des revendications 1 à 3, dans lequel la face intérieure de l'enveloppe présente la forme d'un paraboloïde de révolution et le transducteur est disposé sensiblement au point focal du paraboloïde de révolution.

5. Système de détection de température selon l'une quelconque des revendications 1 à 4, dans lequel l'enveloppe comporte un isolant thermique à l'exclusion de l'ouverture.

6. Système de détection de température selon l'une quelconque des revendications 3 à 5, dans lequel l'écran présente une forme extérieure convexe.

7. Système de détection de température comprenant
   - une enveloppe (22) ayant un volume intérieur creux,
   - un capteur de température (24) qui est disposé dans l'espace intérieur creux de l'enveloppe (22) et présente une résistance électrique variant en réponse à ses variations de température,
   - un moyen de commande (26) pour commander la température du capteur de température afin qu'il soit à une température prédéterminée, par régulation de la puissance électrique, et
   - un moyen de jugement 28 pour déterminer les conditions thermiques ambiantes afin de produire un signal de sortie,
   - un élément chauffant (58) pour chauffer le capteur de température en lui appliquant un courant électrique d'alimentation,

- le moyen de jugement (28) déterminant les conditions thermiques ambiantes à partir de la puissance électrique fournie au capteur de température par le moyen de commande

caractérisé en ce que

- l'espace intérieur creux de l'enveloppe est défini par la face intérieure (21) de l'enveloppe qui présente une bonne réflectivité à la lumière et à la chaleur, l'enveloppe ayant à son sommet une ouverture (23) communiquant avec le volume creux.

8. Système de détection de température selon la revendication 7, dans lequel ledit capteur de température (57) est une thermistance.

9. Système de détection de température selon la revendication 7 ou 8, comprenant en outre un capuchon poreux sur l'ouverture de l'enveloppe, ce capuchon recouvrant partiellement l'ouverture et ne réfléchissant ni la lumière ni la chaleur.

10. Système de détection de température selon l'une quelconque des revendications 7 à 9, dans lequel la face intérieure de l'enveloppe présente une forme telle que celle d'un paraboloïde de révolution et le capteur de température est disposé sensiblement au point focal du paraboloïde de révolution.

11. Système de détection de température selon l'une quelconque des revendications 7 à 10, dans lequel l'enveloppe comporte un isolant thermique à l'exclusion de l'ouverture.

12. Système de détection de température selon l'une quelconque des revendications 9 à 11, dans lequel l'écran poreux présente une forme extérieure convexe.

13. Système de détection de température selon l'une quelconque des revendications 7 à 12, dans lequel l'élément chauffant est disposé au voisinage du capteur de température.

14. Système de détection de température selon la revendication 13, dans lequel l'élément chauffant est enroulé autour du capteur de température de façon à en être isolé.

**Patentansprüche**

1. Temperaturfühlanordnung, umfassend
   - ein Gehäuse (22), welches einen hohlen Innenraum hat,
   - einen Wandler (24), der in dem hohlen Innenraum des Gehäuses (22) angeordnet ist und seinen elektrischen Widerstand beim Ansprechen auf eine Temperaturänderung von ihm ändert und weiterhin Wärme erzeugt durch zugeführte ihm elektrische Energie,
   - eine Steuereinrichtung (26) zum Steuern der Temperatur des Wandlers derart, daß sie sich auf einer vorbestimmten Temperatur befindet, und zwar durch Steuern der elektrischen Energie, und
   - eine Prüfeinrichtung (28) zum Bestimmen des thermischen Zustandes des Umgebung auf der Basis der dem Wandler von der Steuereinrichtung zugeführten elektrischen Energie, um ein Ausgangssignal zu liefern,

**dadurch gekennzeichnet,** daß
   - der hohle Innenraum des Gehäuses durch eine Innenseitenfläche (21) des Gehäuses bestimmt ist, welche gutes Reflektionsvermögen für Licht und Wärme hat, und das Gehäuse an seinem oberen Teil eine Öffnung (23) zu dem hohlen Raum hat.

2. Temperaturfühlanordnung nach Anspruch 1, wobei der Wandler ein Thermistor ist.

3. Temperaturfühlanordnung nach Anspruch 1 oder 2, weiter umfassend eine poröse Abschirmung (34) an der Öffnung des Gehäuses, wobei die Abschirmung die Öffnung teilweise abdeckt und für Licht und Wärme nicht reflektierend ist.

4. Temperaturfühlanordnung nach irgendeinem der Ansprüche 1 bis 3, wobei die Innenseitenfläche des Gehäuses als Rotationsparaboloid gestaltet ist und der Wandler im wesentlichen an dem Brennpunkt des Rotationsparaboloides angeordnet ist.

5. Temperaturfühlanordnung nach irgendeinem der Ansprüche 1 bis 4, wobei das Gehäuse außer an der Öffnung einen Wärmeisolator hat.

6. Temperaturfühlanordnung nach einem der Ansprüche 3 bis 5, wobei die Abschirmung eine außen konvexe Gestalt hat.

7. Temperaturfühlanordnung, umfassend
   - ein Gehäuse (22), welches einen hohlen Innenraum hat,
   - einen Temperaturfühler (24), der in dem hohlen Innenraum des Gehäuses (22) angeordnet ist und seinen elektrischen Widerstand beim Ansprechen auf eine Temperaturänderung von ihm ändert,

- eine Steuereinrichtung (26) zum Steuern der Temperatur des Temperaturfühlers derart, daß sie sich auf einer vorbestimmten Temperatur befindet, und zwar durch Steuern der elektrischen Energie,

- eine Prüfeinrichtung (28) zum Bestimmen des thermischen Zustandes der Umgebung, um ein Ausgangssignal zu liefern, und

- eine Heizeinrichtung (58) zum Erhitzen des Temperaturfühlers, durch diesem zugeführte elektrische Energie, wobei

- die Prüfeinrichtung (28) den thermischen Zustand der Umgebung bestimmt auf der Basis der dem Temperaturfühler von der Steuereinrichtung zugeführten elektrischen Energie,

**dadurch gekennzeichnet,** daß

- der hohle Innenraum des Gehäuses durch eine Innenseitenfläche (21) des Gehäuses bestimmt ist, welche gutes Reflektionsvermögen für Licht und Wärme hat, und das Gehäuse an seinem oberen Teil eine Öffnung (23) zu dem hohlen Raum hat.

8. Temperaturfühlanordnung nach Anspruch 7, wobei der Temperaturfühler (57) ein Thermistor ist.

9. Temperaturfühlanordnung nach Anspruch 7 oder 8, weiter umfassend eine poröse Abschirmung an einer Öffnung des Gehäuses, wobei die Abschirmung die Öffnung teilweise abdeckt und gegenüber Licht und Wärme nicht reflektierend ist.

10. Temperaturfühlanordnung nach irgendeinem der Ansprüche 7 bis 9, wobei die Innenseitenfläche des Gehäuses als ein Rotationsparaboloid gestaltet ist und der Temperaturfühler im wesentlichen an dem Brennpunkt des Rotationsparaboloides angeordnet ist.

11. Temperaturfühlanordnung nach irgendeinem der Ansprüche 7 bis 10, wobei das Gehäuse außer an der Öffnung einen Wärmeisolator hat.

12. Temperaturfühlanordnung nach irgendeinem der Ansprüche 9 bis 11, wobei die poröse Abschirmung eine außen konvexe Gestalt hat.

13. Temperaturfühlanordnung nach irgendeinem der Ansprüche 7 bis 12, wobei die Heizeinrichtung in der Nähe des Temperaturfühlers angeordnet ist.

14. Temperaturfühlanordnung nach Anspruch 13, wobei die Heizeinrichtung in gegenüber dem Temperaturfühler isolierter Weise um diesen gewickelt ist.

## FIG.1 (PRIOR ART-1)

EP 0 274 077 B1

## FIG.2 (PRIOR ART-2)

## FIG.3

# FIG.4

# FIG.5

Control part

FIG.6

FIG.7

# FIG.8

# FIG.9

## FIG.10

FIG.11

34
35
33
36
38
37

FIG.12

40
39
41

## FIG.13

## FIG.14

## FIG.15

## FIG.16